# EUROPÄISCHE PATENTSCHRIFT

(11) **EP 0 597 214 B1**
(45) Veröffentlichungstag und Bekanntmachung des Hinweises auf die Patenterteilung: **06.12.1995**
(21) Anmeldenummer: 93115051.0
(22) Anmeldetag: 18.09.1993
(51) Int. Cl.: B23K 11/24

(54) **Vielpunkt-Widerstandsschweissmaschine zum Schweissen von Drahtgittern**
Multiple electrode resistance spot welding machine for the welding of wire gratings
Machine de soudure par points multiples pour le soudage de grilles en fils de fer

(30) Priorität: 11.11.1992 CH 3482/92
(43) Veröffentlichungstag der Anmeldung: 18.05.1994
(73) Patentinhaber: H.A. SCHLATTER AG, CH-8952 Schlieren Zürich (CH)
(72) Erfinder: Widmer, Robert, CH-5212 Hausen (CH)
(74) Vertreter: Roshardt, Werner Alfred, Dipl.-Phys.

(56) Entgegenhaltungen:
- CH-A- 633 738
- DE-U- 8 334 723
- GB-A- 2 249 747
- US-A- 5 072 090
- PATENT ABSTRACTS OF JAPAN vol. 10, no. 118 (M-475) (2175) 2. Mai 1986 & JP-A-60 247 482 (NISSAN JIDOSHA K.K.) 7. Dezember 1985

## Beschreibung

Die Erfindung bezieht sich auf eine Vielpunkt-Widerstandsschweissmaschine zum Schweissen von Drahtgittern mittels Gleichstrom, umfassend eine Kontaktelektrodenanordnung zum gleichzeitigen Kontaktieren aller zu einem anzuschweissenden Querdraht gehörenden Gitterpunkt des Drahtgitters und eine Schaltanordnung mit mehreren Schweisstransformatoren zum gleichzeitigen Beaufschlagen aller kontaktierten Gitterpunkte mit Schweissstrom.

### Stand der Technik

Eine Widerstandsschweissmaschine der oben genannten Art ist z. B. aus der CH-PS 633 738 bekannt. Auf zwei quer über die ganze Breite der Schweissmaschine verlaufenden Stromschienen sitzt eine Vielzahl von sog. Reiterelektroden. Für jeden zu schweissenden Gitterpunkt des Querdrahts ist eine solche Reiterelektrode vorgesehen. Der gegenüberliegende Anpressbalken trägt eine Anzahl von Strombrücken, welche jeweils zwei benachbarte Gitterpunkte miteinander verbinden.

Es hat sich nun gezeigt, dass mit der bekannten Widerstandsschweissmaschine aufgrund von Nebenschlüssen beträchtlich mehr elektrische Leistung aufgebracht werden muss, als zur Schweissung eigentlich nötig wäre. Dieses Problem wird insbesondere dann akut, wenn engmaschige Gitter mit grossen Drahtquerschnitten geschweisst werden müssen. Bei solchen Anwendungen wäre es erwünscht, wenn der in jedem Gitterpunkt fliessende Schweissstrom individuell überwacht oder eingestellt werden könnte. Eine vollständige Entkopplung wird durch den bereits geschweissten Teil des in Bearbeitung befindlichen Gitterrosts allerdings verunmöglicht.

Es sind nun Gleichstrom-Widerstandsschweissmaschinen mit mehreren Punktschweisszangen bekannt, bei welchen die einzelnen Schweisspunkte einzeln überwacht werden können. In diesem Zusammenhang wird z. B. auf die US-PS 5,072,090 oder die GB 2 249 747 hingewiesen. Mit Hilfe von geeignet angesteuerten Inverterschaltungen können die Schweisspunkte unabhängig voneinander geschweisst werden. Allerdings ist dies nur in einer zeitlichen Staffelung möglich, so dass sich auch bei enger Staffelung höchstens ein scheinbar, nicht aber tatsächlich gleichzeitiges Schweissen durch die verschiedenen Zangen realisieren lässt.

Dies mag beim Zusammenschweissen von Blechkonstruktionen angehen. Beim Schweissen von Gittermatten ist ein gleichzeitiges Schweissen aller Gitterpunkte eines Querdrahts wegen des zum Teil beträchtlichen Schweisshubs von 1 bis 2 mm unerlässlich.

### Darstellung der Erfindung

Aufgabe der Erfindung ist es nun, eine Einrichtung der eingangs genannten Art anzugeben, die sich auch zum Schweissen von engmaschigen Gittern mit grossen Drahtquerschnitten eignet.

Gemäss der Erfindung besteht die Lösung darin, dass die Kontaktelektrodenanordnung mehrere Schweisselektrodenpaare aufweist, welche ihren jeweils zugeordneten Gitterpunkt von beiden Seiten kontaktieren, und dass die Schaltanordnung so ausgebildet ist, dass nebeneinanderliegende Schweisselektrodenpaare relativ zueinander potentialmässig floatend sind.

Bei der Erfindung gibt es somit keine durchgehenden Stromschienen mehr. Dadurch dass die Schweisselektrodenpaare potentialmässig floaten, ergeben sich beim Schweissen minimale Potentialdifferenzen und somit minimale Querströme.

Vorzugsweise ist jedes Elektrodenpaar in einem potentialmässig nicht fixierten Sekundärkreis je eines Schweisstransformators eingeschlossen. Mit anderen Worten: Die einzige Querverbindung stellt jeweils der Querdraht selbst dar.

Mit Vorteil sind die voneinander unabhängigen Elektrodenpaare in einem geeigneten Abstandsraster derart auf eine Maschenweite des Drahtgitters abgestimmt, dass jeder zu schweissende Gitterpunkt von einem eigenen Elektrodenpaar geschweisst wird. Bei besonders kleinen Maschenweiten können pro Elektrodenpaar u. U. auch zwei oder mehrere Gitterpunkte kontaktiert werden, ohne dass der erfindungsgemässe Effekt verlorengeht. Relevant ist dabei das Verhältnis Abstand der Längsdrähte (und damit der Gitterpunkte) zu Querschnittsfläche des Querdrahts.

Der Abstandsraster ist typischerweise kleiner als 15 cm, vorzugsweise 10 cm oder kleiner und bei besonders engen Maschen 8 cm oder weniger. Der minimale Abstandsraster ist durch die minimale Grösse der Schaltungsanordnung (insbesondere der Transformatoren) bestimmt. In den meisten Fällen dürften 5, 7,5 und 10 cm einen guten Kompromiss darstellen.

Gemäss einer vorteilhaft einfachen Ausführungsform sind die Schweisstransformatoren primärseitig an zwei Phasen eines Drei-Phasen-Versorgungsnetzes angeschlossen, wobei die Anschlüsse über die Maschinenbreite hinweg zyklisch variieren.

Um mit kleineren Transformatoren arbeiten zu können, kann es von Vorteil sein, eine Mittelfrequenzschaltung (400 bis 1000 Hz) einzusetzen.

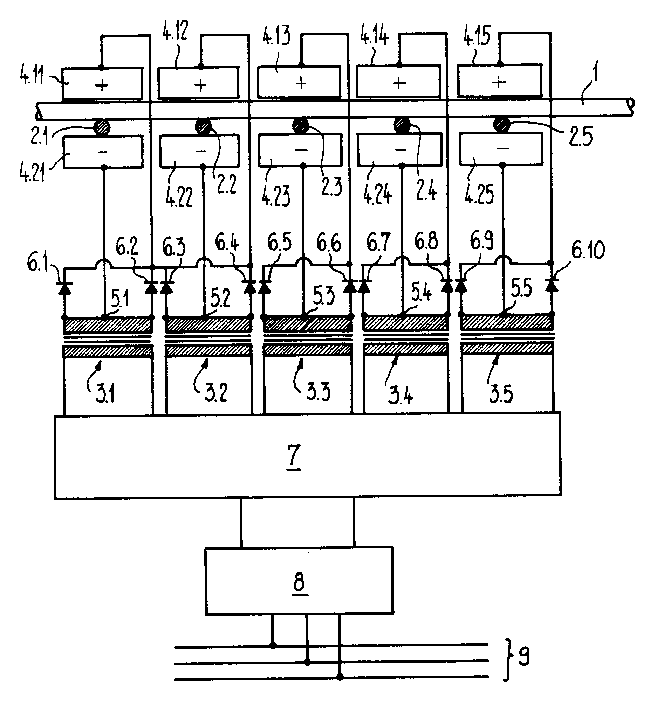

### Kurze Beschreibung der Zeichnung

In der einzigen Figur ist schematisch die Schaltungsanordnung für eine erfindungsgemässe Gitterschweissmaschine gezeigt.

### Wege zur Ausführung der Erfindung

Ein Querdraht 1 ist mit mehreren zu ihm senkrecht stehenden Längsdrähten 2.1, ..., 2.5 zu verschweissen. Gemäss einer besonders bevorzugten Ausführungsform der Erfindung ist für jeden Gitterpunkt (d. h. Kreuzungspunkt zwischen Längs- und Querdraht) ein separates Paar von Kontaktelektroden 4.1.1, 4.2.1 resp. 4.1.2, 4.2.2 resp. ..., 4.1.5, 4.2.5 vorgesehen. Der positive Pol, d. h. im vorliegenden Beispiel die Kontaktelektroden 4.1.1, 4.1.2, ... kontaktiert jeweils den Querdraht 1 (von oben), während der negative Pol, d. h. die Kontaktelektroden 4.2.1, 4.2.2, ... je einen Längsdraht 2.1, 2.2, ... von unten kontaktiert. Mit Hilfe von Pneumatikzylindern, Federn oder sonstigen Krafterzeugern wird bei jedem Kontaktelektrodenpaar 4.1.1/4.2.1 resp. 4.1.2/ 4.2.2, ... dafür gesorgt, dass die Längsdrähte 2.1, ..., 2.5 gut auf den Querdraht 1 gepresst werden.

Für jedes Kontaktelektrodenpaar 4.1.1/4.2.1, 4.1.2/4.2.2, ... ist ein Transformator 3.1, ..., 3.5 mit Mittelabgriff 5.1, ..., 5.5 auf der Sekundärseite vorgesehen. Der Mittelabgriff 5.1, 5.2, ... ist jeweils mit dem negativen Pol, (d. h. der Kontaktelektrode 4.2.1, 4.2.2, ...) verbunden. Der positive Pol (d. h. die Kontaktelektroden 4.1.1, 4.1.2, ...) ist jeweils über Gleichrichterelemente 6.1, 6.2 resp. 6.3, 6.4 resp. ..., 6.10 (Halbleiterdioden) an den Endabgriffen der Sekundärseite angeschlossen. Das Schweissen wird also mit gleichgerichtetem Strom durchgeführt.

Primärseitig hängen die Transformatoren 3.1, ..., 3.5 an einer Inverterschaltanordnung 7. Diese wiederum hängt an einer Gleichrichterschaltung 8. Die Energieversorgung erfolgt durch ein Drei-Phasen-Netz 9.

Gemäss der Erfindung sind die einzelnen Kontaktelektrodenpaare relativ zueinander nicht potentialmässig fixiert, sondern floatend. Beim Schweissen stellt dann der Querdraht 1 die einzige Querverbindung dar. Die Breite der einzelnen Kontaktelektroden 4.1.1, ..., 4.1.5, 4.2.1, ..., 4.2.5 ist jedenfalls etwas geringer als der Abstand benachbarter Längsdrähte z. B. 2.1, 2.2. Bevorzugt sind Breiten von weniger als 10 cm. Besonders gut entfaltet die Erfindung ihre Wirkung bei Breiten von 7,5 oder sogar 5 cm. Bei noch kleineren Maschenweiten ist mit technischen Hindernissen zu rechnen (Erzeugung hoher Schweisströme in engen Raumverhältnissen), was jedoch nicht das Prinzip der Erfindung in Frage stellt. Bei sehr kleinen Maschenweiten kann u. U. hingenommen werden, wenn ein Schweisselektrodenpaar gleichzeitig zwei oder mehr Gitterpunkte kontaktiert.

Vorzugsweise sind die einzelnen Kontaktelektroden ziemlich schmal und auf einer Tragkonstruktion seitlich verschiebbar angeordnet. Dadurch ist es möglich (z. B. durch Lösen von Fixierschrauben) die Gitterschweissmaschine mit geringem Aufwand auf diverse Maschenweiten einzustellen.

Die Inverterschaltanordnung 7 versorgt zwar alle Transformatoren 3.1, ..., 3.5 gleichzeitig mit Strom, ermöglicht aber vorzugsweise eine individuelle Einstellung der Knotenströme. Dies lässt sich auf unterschiedliche Arten realisieren. Die Inverterschaltanordnung 7 wird auf Mittelfrequenz (typischerweise 400 bis 1000 Hz) betrieben. Dies bedeutet zwar einen erhöhten schaltungstechnischen Aufwand, erlaubt aber den Uebergang zu kleineren Transformatoren. Im Prinzip können die Schweisstransformatoren aber auch über Thyristorstromstellen direkt an die Phasen eines Drei-Phasen-Netzes angeschlossen werden.

Zusammenfassend kann festgehalten werden, dass sich mit erfindungsgemässen Gitterschweissmaschinen eine gleichmässig hohe Qualität aller Schweisspunkte ergibt. Bei kleinen Maschenweiten und grossen Drahtquerschnitten kann dies mit guter Effizienz (kleine Nebenschlussströme, keine Einbrandstellen an den Elektrodenauflagen) erreicht werden.

## Patentansprüche

1. Vielpunkt-Widerstandsschweissmaschine zum Schweissen von Drahtgittern mittels Gleichstrom, umfassend eine Kontaktelektrodenanordnung zum gleichzeitigen Kontaktieren aller zu einem anzuschweissenden Querdraht (1) gehörenden Gitterpunkte des Drahtgitters und eine Schaltanordnung mit mehreren Schweisstransformatoren zum gleichzeitigen Beaufschlagen aller kontaktierten Gitterpunkte mit Schweissstrom, dadurch gekennzeichnet, dass die Kontaktelektrodenanordnung mehrere Schweisselektrodenpaare (4.1.1/4.2.1, 4.1.2/4.2.2, ..., 4.1.5/4.2.5) aufweist, welche ihren jeweils zugeordneten Gitterpunkt von beiden Seiten kontaktieren, und dass die Schaltanordnung so ausgebildet ist, dass nebeneinanderliegende Schweisselektrodenpaare (4.1.1/4.2.1 und 4.1.2/4.2.2) potentialmässig floatend sind.

2. Vielpunkt-Widerstandsschweissmaschine nach Anspruch 1, dadurch gekennzeichnet, dass jedes Kontaktelektrodenpaar (4.1.1/4.2.1, ..., 4.1.5/4.2.5) in einem potentialmässig nicht fixierten Sekundärkreis je eines Schweisstransformators (3.1, ..., 3.5) eingeschlossen ist.

3. Vielpunkt-Widerstandsschweissmaschine nach Anspruch 1 oder 2, dadurch gekennzeichnet, dass die Kontaktelektrodenpaare (4.1.1/4.2.1, ..., 4.1.5/4.2.5) in einem Abstandsraster derart auf eine Maschenweite des Drahtgitters abgestimmt sind, dass jeder Gitterpunkt von einem eigenen Kontaktelektrodenpaar geschweisst wird.

4. Vielpunkt-Widerstandsschweissmaschine nach Anspruch 3, dadurch gekennzeichnet, dass der Abstandsraster weniger als 15 cm, insbesondere höchstens 10 cm, bevorzugterweise etwa 5 bis 10 cm beträgt.

5. Vielpunkt-Widerstandsschweissmaschine nach einem der Ansprüche 1 bis 4, dadurch gekennzeichnet, dass die Schweisstransformatoren (3.1, ..., 3.5) primärseitig über Thyristorstromstellen an zwei Phasen eines Drei-Phasen-Netzes angeschlossen sind, wobei die Anschlüsse über die Maschinenbreite hinweg zyklisch variieren.

## Claims

1. Multi-spot resistance-welding machine for welding wire gratings by means of direct current, including a contact-electrode arrangement for simultaneously contacting all of the grating points of the wire grating belonging to a transverse wire (1) to be welded on and a circuit with a plurality of welding transformers for simultaneously applying direct current to all of the grating points contacted, characterized in that the contact-electrode arrangement comprises a plurality of pairs of welding electrodes (4.1.1/4.2.1, 4.1.2/4.2.2, ..., 4.1.5/4.2.5) which contact their respective associated grating points from both sides, and in that the circuit is designed in a manner such that adjacent pairs of welding electrodes (4.1.1/4.2.1 and 4.1.2/ 4.2.2) have floating voltages.

2. Multi-spot resistance-welding machine according to Claim 1, characterized in that each pair of contact electrodes (4.1.1/4.2.1, ..., 4.1.5/4.2.5) is connected in a secondary circuit of each welding transformer (3, 1 ..., 3.5) in which the voltage is not fixed.

3. Multi-spot resistance-welding machine according to Claim 1 or Claim 2, characterized in that the pairs of contact electrodes (4.1.1/4.2.1, ..., 4.1.5/4.2.5) are coordinated with a mesh width of the wire grating in a spacing grid such that each grating point is welded by an individual pair of contact electrodes.

4. Multi-spot resistance-welding machine according to Claim 3, characterized in that the grid spacing is less than 15 cm, particularly at most 10 cm and preferably about 5 to 10 cm.

5. Multi-spot resistance-welding machine according to any one of Claims 1 to 4, characterized in that the welding transformers (3.1, ..., 3.5) are connected, on the primary side, to two phases of a three-phase network, by means of thyristor current regulators, the supplies varying cyclically over the width of the machine.

## Revendications

1. Machine de soudage multipoint par résistance pour souder des treillis métalliques au moyen d'un courant continu, comprenant un groupe d'électrodes de contact pour établir simultanément un contact avec tous les points d'entrelacement du treillis métallique qui font partie d'un fil métallique transversal (1) à souder, et un groupe de commutation muni de plusieurs transformateurs de soudage pour la sollicitation simultanée, par un courant de soudage, de tous les points d'entrelacement avec lesquels un contact est établi, caractérisée par le fait que le groupe d'électrodes de contact présente plusieurs paires d'électrodes de soudage (4.1.1/4.2.1, 4.1.2/4.2.2, ..., 4.1.5/4.2.5) qui sont en contact, de part et d'autre, avec le point d'entrelacement qui leur est respectivement affecté ; et par le fait que le groupe de commutation est réalisé de telle sorte que des paires juxtaposées d'électrodes de soudage (4.1.1/4.2.1 et 4.1.2/4.2.2) soient de potentiel flottant.

2. Machine de soudage multipoint par résistance, selon la revendication 1, caractérisée par le fait que chaque paire d'électrodes de contact (4.1.1/4.2.1, ..., 4.1.5/4.2.5) est incluse dans un circuit secondaire, à potentiel non fixe, d'un transformateur respectif de soudage (3.1, ..., 3.5).

3. Machine de soudage multipoint par résistance, selon la revendication 1 ou 2, caractérisée par le fait que les paires d'électrodes de contact (4.1.1/4.2.1, ..., 4.1.5/4.2.5) sont coordonnées avec une largeur de maille du treillis métallique, selon un module d'espacement, de façon telle que chaque point d'entrelacement soit soudé par une propre paire d'électrodes de contact.

4. Machine de soudage multipoint par résistance, selon la revendication 3, caractérisée par le fait que le module d'espacement mesure moins de 15 cm, en particulier 10 cm au maximum et, de préférence, d'environ 5 à 10 cm.

5. Machine de soudage multipoint par résistance, selon l'une des revendications 1 à 4, caractérisée par le fait que les transformateurs de soudage (3.1, ..., 3.5) sont connectés côté primaire, par l'intermédiaire de zones à courant de thyristor, à deux phases d'un réseau triphasé, les connexions variant cycliquement sur la largeur de la machine.
